# EUROPÄISCHE PATENTSCHRIFT

(11) **EP 4 289 042 B1**
(45) Veröffentlichungstag und Bekanntmachung des Hinweises auf die Patenterteilung: **26.03.2025**
(21) Anmeldenummer: 22705733.8
(22) Anmeldetag: 28.01.2022
(51) Int. Cl.: H02H 3/20, H02J 15/00, H02H 7/16, H02H 9/04

(54) **SCHALTUNGSANORDNUNG, ELEKTRISCHER ENERGIESPEICHER MIT EINER SOLCHEN UND VERWENDUNG DERSELBEN ALS ENERGIESPEICHER**
CIRCUIT ARRANGEMENT, ELECTRICAL ENERGY STORE HAVING A CIRCUIT ARRANGEMENT OF THIS TYPE, AND USE OF SAID CIRCUIT ARRANGEMENT AS AN ENERGY STORE
CIRCUIT, ACCUMULATEUR D'ÉNERGIE ÉLECTRIQUE ÉQUIPÉ D'UN TEL CIRCUIT ET SON UTILISATION COMME ACCUMULATEUR D'ÉNERGIE

(30) Priorität: 02.02.2021 DE 102021200924
(43) Veröffentlichungstag der Anmeldung: 13.12.2023
(73) Patentinhaber: SWJ Germany GmbH, 64347 Griesheim (DE)
(72) Erfinder: VELLIOS, Christos, 65474 Bischofsheim (DE); SAUERBORN, Joachim, 65529 Waldems (DE)
(74) Vertreter: WSL Patentanwälte Partnerschaft mbB
(86) Internationale Anmeldenummer: PCT/EP2022/052127
(87) Internationale Veröffentlichungsnummer: WO 2022/167346

(56) Entgegenhaltungen:
- KR-A- 20090 132 905
- US-A1- 2020 044 459

## Beschreibung

Die vorliegende Erfindung betrifft eine Schaltungsanordnung mit zumindest einem Superkondensator und wenigstens einer Bypass-Schaltung, einen elektrischen Energiespeicher mit einer Schaltungsanordnung sowie die Verwendung einer Schaltungsanordnung als Energiespeicher.

Die Speicherung der Energie kann unter anderem durch chemische Umwandlung (bspw. bei Akkumulatoren) oder durch physikalische Prozesse (bspw. bei Kondensatoren) erfolgen.

Kondensatoren können nach ihrer Bauart unterschieden werden. So gibt es beispielsweise Keramikkondensatoren, Kunststoff-Folienkondensatoren, Metallpapierkondensatoren und Elektrolytkondensatoren. Diese Kondensatortypen haben in der Regel eine Kapazität im Bereich von Pikofarad (pF) bis etwa 1 Farad.

Eine Besonderheit unter den Kondensatoren stellen sogenannte Superkondensatoren dar. Superkondensatoren können eine Kapazität im Bereich von Kilofarad oder mehr haben. Die Kapazität von Superkondensatoren ergibt sich aus zwei unterschiedlichen technischen Effekten und kann demzufolge in Doppelschicht- und Pseudokapazität gegliedert werden. Während die Doppelschichtkapazität auf einer Ladungstrennung basiert, ist die Pseudokapazität das Ergebnis von Redoxreaktionen. Im Betrieb summieren sich die Doppelschicht- und die Pseudokapazität zur Gesamtkapazität des Superkondensators.

Eine Besonderheit von Superkondensatoren besteht in einer im Vergleich mit herkömmlichen Kondensatoren geringen Nennspannung von üblicherweise 2,7 V. Zugleich sind Superkondensatoren gegenüber höheren Spannungen äußerst empfindlich. Schon eine geringe Überschreitung der Nennspannung beim Ladevorgang kann zu einer dauerhaften Schädigung des Superkondensators führen. Werden Superkondensatoren in elektronische Schaltungen eingebunden, ist es daher sinnvoll, sie vor höheren Spannungen zu schützen.

Da bei vielen Anwendungen eine höhere Spannung als 2,7 V gewünscht ist, werden Superkondensatoren häufig in Reihe geschaltet, wodurch sich die Nennspannungen addieren. Durch die Reihenschaltung kann es aber beim Ladevorgang vorkommen, dass die einzelnen Superkondensatoren unterschiedlich schnell geladen werden. Grund hierfür sind insbesondere Fertigungstoleranzen, aufgrund derer nominell identische Superkondensatoren tatsächlich unterschiedliche Kapazitäten aufweisen. Das daraus resultierende unterschiedliche Ladeverhalten kann dazu führen, dass einzelne Superkondensatoren die Nennspannung überschreiten und permanent beschädigt werden.

Zur Vermeidung einer Beschädigung von in Reihe geschalteten Superkondensatoren schlägt die WO 2018/237320 A1 eine Balancing-Schaltung vor, bei der jedem Superkondensator eine Bypass-Schaltung zugeordnet ist. Die Bypass-Schaltungen sind an ein Bussystem angeschlossen und bewirken im Falle ihrer Aktivierung einen Ladungsausgleich zwischen den in Reihe geschalteten Superkondensatoren. Die Aktivierung erfolgt über einen Taktgeber. Die Schaltung ist durch die Verwendung eines Bussystems und des Taktgebers komplex. Außerdem bewirkt der Taktgeber nur einen periodischen und keinen permanenten Ladungsausgleich. Somit besteht auch nur zeitweise ein Schutz für die Kondensatoren.

Die EP 1 274 105 B1 schlägt ebenfalls eine Bypass-Schaltung für Superkondensatoren vor. Die Bypass-Schaltung umfasst einen Transistor, einen Tiefpassfilter uns eine Detektoreinheit, die ein logisches Signal erzeugt, das an eine Ladeeinrichtung zum Laden des Superkondensators geliefert wird, wodurch der Ladestrom gesteuert wird, mittels dem der Superkondensator geladen wird. Aufgrund der Detektoreinheit und der Ansteuerung der Ladeeinrichtung ist diese Bypass-Schaltung ebenfalls sehr komplex.

Die DE 600 23 772 T2 offenbart eine Schaltungsanordnung mit einem Doppelschichtkondensator und einem parallel zu dem Doppelschichtkondensator geschalteten Nebenschlussregler sowie einem parallel zu dem Doppelschichtkondensator geschalteten NPN-Transistor. Ein Anschluss des Nebenschlussreglers ist mit der Basis des NPN-Transistors verbunden.

Die US 2020/0044459 A1 offenbart eine Vorrichtung und ein Verfahren, mit denen die Batterien einer Batteriepackung vor Überladung geschützt werden sollen.

Es war daher Aufgabe der Erfindung, eine Schaltungsanordnung bereitzustellen, die einen besseren und preisgünstigen Schutz für Superkondensatoren vor einer Überschreitung der Nennspannung bietet.

Diese Aufgabe wird durch eine Schaltungsanordnung gemäß Anspruch 1 gelöst.

Die erfindungsgemäße Schaltungsanordnung umfasst zumindest einen Superkondensator und wenigstens eine parallel zu dem Superkondensator geschaltete Bypass-Schaltung. Die wenigstens eine Bypass-Schaltung umfasst wenigstens zwei als schaltende Elemente arbeitende, jeweils parallel zum Superkondensator geschaltete Bypass-Transistoren und einen parallel zum Superkondensator geschalteten Querregler, dessen Schaltschwelle den Schaltpunkt für den Bypass-Transistor definiert.

Bei der Erfindung wird ein Querregler verwendet, um die Schutzfunktion - den Überspannungsschutz - für den Superkondensator auszulösen. Unter einem Querregler kann allgemein ein Bauteil verstanden werden, welches parallel zum Superkondensator geschaltet ist und zumindest in aktivem Zustand immer so viel Strom aufnimmt, dass die Spannung an dem Superkondensator konstant gehalten wird. In der Bypass-Schaltung wirkt der Querregler als Schwellenwertschalter. Ein Schwellenwertschalter ist allgemein ein elektronisches oder elektrisches Bauelement, das die Funktion eines Sensors mit einer Schaltfunktion kombiniert. Der Schaltvorgang wird ausgelöst, wenn die vom Sensor "gemessene" physikalische Größe einen voreingestellten Grenzwert (den Schwellenwert) überschreitet. Vorliegend handelt es sich bei der gemessenen Größe um eine Größe der Schaltungsanordnung, nämlich die an dem Superkondensator anliegende Kondensatorspannung. Der Querregler ist bevorzugt schaltbar und weist zu diesem Zweck einen Steuereingang auf. Als Querregler kann beispielweise eine Zenerdiode (nicht schaltbar), auch Z-Diode genannt, oder ein TL431 (schaltbar) eingesetzt werden. Der Querregler kann deshalb auch als Parallelregler, Shuntregler, Zenerdiode oder Schwellenwertschalter bezeichnet werden.

Die Schaltschwelle ist eine intrinsische Größe des Querreglers. Weist der Querregler einen Steuereingang auf, so muss die Schaltschwelle an dem Steuereingang erreicht werden, damit der Querregler schaltet. Bei einem TL431 beträgt die Schaltschwelle 1,5 V bis 2,5 V, bei einer Zenerdiode entspricht die Durchbruchsspannung der Schaltschwelle.

Beim Ladevorgang wird zunächst der Superkondensator wie üblich durch einen Ladestrom geladen. Die Bypass-Schaltung befindet sich so lange in einem passiven Zustand, wie die Schaltschwelle des Querreglers nicht erreicht wird. Bei Erreichen der Schaltschwelle werden die wenigstens zwei Bypass-Transistoren von dem Querregler angesteuert. Die Bypass-Schaltung befindet sich dann in einem aktiven Zustand. Die Bypass-Schaltung leitet in diesem Zustand Strom um den Superkondensator herum. Dieser Strom lädt den Superkondensator nicht weiter auf, sodass es nicht zu einer Überspannung kommt und der Superkondensator geschützt ist.

Die Verstärkungswirkung von Transistoren ist nicht binär, sondern folgt einer Kennlinie und ist von der Höhe der Spannung am Kondensator (Basis-Emitter-Spannung) und/oder eines Steuersignals abhängig. Eine höhere Basis-Emitter-Spannung erhöht die Verstärkung, das heißt der Transistor wird weiter "aufgesteuert". Bei einem geringen Steuersignal ist die Verstärkungswirkung eines Transistors geringer. Einfache Kondensatoren haben im Vergleich zu Superkondensatoren höhere Nominalspannungen. Diese höheren Spannungen stehen dann auch zum Ansteuern von Transistoren in einer Bypass-Schaltung zur Verfügung. In Folge der höheren Spannungen steuern die Transistoren der Bypass-Schaltung stärker durch und leiten sofort einen höheren Strom um den Kondensator herum und schützen ihn auf diese Weise sehr effektiv. Bei einfachen Kondensatoren erzielen Bypass-Schaltungen dadurch eine ausreichende Bypass-Wirkung.

Bei Superkondensatoren ist das aufgrund ihrer geringen Nennspannung nicht ohne weiteres der Fall. Es hat sich gezeigt, dass die geringe Nennspannung von Superkondensatoren zur Folge hat, dass das Steuersignal die Transistoren nicht optimal schaltet und somit nur eine reduzierte Stromleitung, d. h. kein optimaler Schutz für die Superkondensatoren, gegeben ist.

Durch die Anordnung von mindestens zwei Bypass-Schaltungen parallel zu dem Superkondensator kann insgesamt mehr Strom um den Superkondensator herum geleitet werden. Die Bypass-Schaltungen sind dabei unabhängig voneinander. Es können daher unterschiedliche Schaltpunkte für den jeweilig angesteuerten Bypass-Transistor vorgesehen werden. Auf diese Weise lässt sich der Schutz des Superkondensators beispielsweise auch mehrstufig in Abhängigkeit der anliegenden Spannung zuschalten.

Eine weitere Verbesserung der Schutzwirkung wird erreicht, indem jede Bypass-Schaltung zwei als schaltende Elemente arbeitende, jeweils parallel zum Superkondensator geschaltete Bypass-Transistoren umfasst, wobei die Schaltschwelle des Querreglers den Schaltpunkt für die beiden parallel geschalteten Bypass-Transistoren definiert. Die Bypass-Transistoren sind bevorzugt nominell identisch. Die zwei Bypass-Transistoren werden in diesem Fall gemeinsam geschaltet und ermöglichen es, dass ein höherer Strom um den Superkondensator herum geleitet wird.

Superkondensatoren unterliegen wie beschrieben herstellungsbedingten Toleranzen (Fertigungstoleranzen). Sind in einer Schaltung mehrere Superkondensatoren in Reihe geschaltet, so werden die einzelnen Superkondensatoren unterschiedlich schnell geladen. Dieser Effekt nimmt mit der Differenz der tatsächlichen Kapazität der einzelnen Kondensatoren zu. Die Erfinder haben erkannt, dass sich dieser Effekt durch ein Parallelschalten mehrerer Kondensatoren verringern lässt, wodurch die einzelnen Superkondensatoren besser geschützt werden. Bei vorteilhaften Weiterbildungen sind daher zumindest zwei parallel geschaltete, Superkondensatoren vorgesehen, die gemeinsam eine Superkondensatorgruppe bilden. Mit anderen Worten: es werden mehrere Superkondensatoren parallel geschaltet und parallel dazu sind die zwei Bypass-Schaltungen oder eine einzige Bypass-Schaltung mit zwei Bypass-Transistoren vorgesehen. Das Parallelschalten mehrerer Kondensatoren führt statistisch dazu, dass starke Abweichungen der Superkondensatorgruppe von ihrer Nennkapazität weniger wahrscheinlich werden. Besonders bevorzugt sind die parallel geschalteten Superkondensatoren nominell baugleich. Baugleiche Bauteile haben die gleichen Toleranzgrenzen, wodurch der statistische Effekt besonders wirksam ist.

Bevorzugt sind mehrere Superkondensatoren oder Superkondensatorgruppen in Reihe geschaltet, wobei jedem der mehreren Superkondensatoren oder jeder der mehreren Superkondensatorgruppen wenigstens eine parallel geschaltete Bypass-Schaltung gemäß der vorstehenden Beschreibung zugeordnet ist. Dadurch weist die Schaltungsanordnung eine größere Gesamtnennspannung auf, woraus sich mehr Anwendungsmöglichkeiten für die Schaltungsanordnung ergeben.

Der Bypass-Transistor ist bevorzugt ein Bipolartransistor. Auch ein MOSFET (Metall-Oxid-Halbleiter-Feldeffekttransistor) kann verwendet werden. Jedenfalls ist es bevorzugt, dass der Bypass-Transistor schon bei geringen Spannungen, insbesondere bei < 2,7 V, einen ausreichend hohen Strom, insbesondere > 2 A, zwischen Basis und Emitter liefert. Auf diese Weise bietet der Bypass-Transistor eine gute Schutzfunktion für den Superkondensator.

Bei welcher an dem Superkondensator bzw. der Superkondensatorgruppe anliegenden Kondensatorspannung der Querregler schaltet, also seine Schaltschwelle erreicht, wird bevorzugt durch einen parallel zum Superkondensator geschalteten Spannungsteiler definiert, dessen Knoten mit dem Steuereingang des Querreglers der wenigstens einen Bypass-Schaltung verbunden ist. Auf diese Weise kann die Bypass-Schaltung an den Superkondensator bzw. die Superkondensatorgruppe angepasst werden. Der Spannungsteiler umfasst bevorzugt wenigstens zwei in Reihe geschaltete Widerstände, zwischen denen der Knoten liegt und die das Knotenpotential beeinflussen. Besonders bevorzugt sind die Spannungsteiler der beiden jeweils parallel zu dem gleichen Superkondensator geschalteten Bypass-Schaltungen und damit ihre Knotenpotentiale unterschiedlich. Auf diese Weise werden die beiden Bypass-Schaltungen zu unterschiedlichen Zeitpunkten, nämlich bei unterschiedlichen Kondensatorspannungen, kaskadenartig zugeschaltet. Hierdurch wird der Ladestrom bei Annäherung an die Nominalspannung des oder der Superkondensatoren stufenweise abgesenkt und die Gefahr des "Überschießens" der Ladespannung gemindert.

Der Spannungsteiler der wenigstens einen Bypass-Schaltung umfasst bevorzugt eine variable Widerstandsanordnung, mittels der das Knotenpotential auswählbar ist. Mit anderen Worten kann mittels der variablen Widerstandsanordnung ausgewählt werden, bei welcher Kondensatorspannung der Querregler seine Schaltschwelle erreicht. Auf diese Weise können unterschiedliche Bypass-Schaltungen, beispielsweise innerhalb einer Bypasskaskade oder für verschiedene Superkondensatoren, mit den gleichen Bauteilen realisiert werden, wodurch die Produktionskosten gesenkt werden können. Das Knotenpotential wird dann je nachdem, welcher Schaltpunkt gewünscht ist oder welche Kapazität der parallelgeschaltete Superkondensator hat, beeinflusst.

Die variable Widerstandsanordnung weist bevorzugt mehrere parallele Teilstränge mit jeweils einem unterschiedlichen elektrischen Widerstand auf und umfasst ein Auswahlmittel, wobei mittels des Auswahlmittels genau ein Teilstrang als leitender Teilstrang auswählbar ist oder mehrere Teilstränge als leitende Teilstränge auswählbar sind. Das Auswahlmittel ermöglicht es, auf einfache Weise zwischen den Teilsträngen genau den oder die Teilstrang/Teilstränge auszuwählen, der/die für den einzusetzenden Superkondensator der richtige ist/die richtigen sind. Die Auswahl kann durch eine feste Kontaktierung, beispielsweise durch Verlöten, oder eine variable Kontaktierung, beispielsweise mittels eines Wechselschalters, erfolgen.

Werden für einen Superkondensator oder eine Superkondensatorgruppe zwei Bypass-Schaltungen eingesetzt und sollen deren Querregler bei unterschiedlichen Kondensatorspannungen schalten, so kann bei Verwendung identischer Komponenten in einer Bypass-Schaltung ein erster Teilstrang und in der anderen Bypass-Schaltung ein zweiter Teilstrang ausgewählt werden. Dadurch sind die Knotenpotentiale der zwei Spannungsteiler immer unterschiedlich und in Folge weichen auch die Schaltzeitpunkte der Querregler voneinander ab. Dadurch kann der unterschiedliche Schaltzeitpunkt der beiden Bypass-Schaltungen auf einfache Weise realisiert werden.

Alternativ zu einer Mehrzahl von Teilsträngen umfasst die variable Widerstandsanordnung bevorzugt ein Potentiometer. Ein Potentiometer ermöglicht eine stufenlose Einstellung des Widerstandes und damit schlussendlich des Schaltzeitpunktes. Eine Schaltungsanordnung mit Potentiometer ist damit flexibler an die Bedürfnisse anpassbar.

Die wenigstens eine Bypass-Schaltung umfasst bevorzugt einen Auswertetransistor zum Ansteuern einer Auswerteeinheit, wobei die Schaltschwelle des Querreglers den Schaltpunkt für den Auswertetransistor definiert. Der Auswertetransistor ermöglicht es, mittels einer Auswerteeinheit festzustellen, ob der Querregler geschaltet hat und die Bypass-Schaltung aktiv ist. Ein Ausgang des Auswertetransistors ist mit einem Steuereingang der Auswerteeinheit verbunden. Die Schaltungsanordnung kann die Auswerteeinheit auch mit umfassen. Bevorzugt ist eine gemeinsame oder zentrale Auswerteeinheit für mehrere Bypass-Schaltungen der Schaltungsanordnung vorgesehen. Sind beispielsweise in zwei parallel geschalteten Bypass-Schaltungen unterschiedliche Schaltzeitpunkte für die Bypass-Transistoren definiert, so kann mittels der Auswerteeinheit ermittelt werden, welche der beiden Bypass-Schaltungen wann zugeschaltet wird. Hier zeigt sich ein weiterer Vorteil der unterschiedlichen Knotenpotentiale bei mehreren Bypässen. Mehrere Auswertetransistoren erlauben eine genauere (stufenweise) Kontrolle des Zustands der Schaltung/des Superkondensators, um beispielsweise einen ordnungsgemäßen Ladevorgang bis zur gewünschten Kondensatorspannung oder einen Alterungsprozess oder einen anderweitigen Defekt zu ermitteln. Besonders bevorzugt ist daher in einer Schaltungsanordnung mit wenigstens zwei Bypass-Schaltungen eine zentrale Auswerteeinheit vorgesehen, wobei ein Ausgang jedes Auswertetransistors der wenigstens zwei Bypass-Schaltungen mit einem Eingang der Auswerteeinheit verbunden ist.

Es kann gewünscht sein, den Ladevorgang zu unterbrechen. Das ist beispielsweise der Fall, wenn alle Superkondensatoren der Schaltungsanordnung vollständig geladen sind. Dieser Zustand kann wie beschrieben anhand der Auswertetransistoren und der Auswerteeinheit ermittelt werden. Die Schaltungsanordnung umfasst bevorzugt ein Schaltorgan, welches eingerichtet ist, die Verbindung zwischen einem Anschluss für eine Stromquelle und dem Superkondensator trennen und schließen zu können. Das Schaltorgan ist bevorzugt ein Relais.

Bevorzugt ist ein Widerstand zu dem Bypass-Transistor in Reihe geschaltet und der Widerstand und der Bypass-Transistor sind gemeinsam parallel zu dem Superkondensator geschaltet. Dadurch wird verhindert, dass es im Falle einer Aktivierung der Bypass-Schaltung zu einem Kurzschluss kommt.

Der Querregler definiert den Schaltpunkt für den Bypass-Transistor bevorzugt, indem ein Ausgang des Querreglers mit einem Steuereingang jedes Bypass-Transistors verbunden ist. Besonders bevorzugt ist dabei zwischen dem Ausgang (Anodenanschluss) des Querreglers und dem Eingang jedes Bypass-Transistors ein Widerstand angeordnet. Die Verwendung eines Widerstands zwischen Querregler und Bypass-Transistor dient einem Toleranzausgleich. Durch die Widerstände wird sichergestellt, dass die tatsächlichen Schaltzeitpunkte der Bypass-Transistoren, die toleranzbedingt immer abweichen, nicht zu weit auseinander liegen.

Es hat sich gezeigt, dass es sinnvoll sein kann, Superkondensatoren auch beim Entladen zu schützen. Insbesondere ist eine Entladung unter einen vorgegebenen Wert grundsätzlich unerwünscht. Bevorzugt umfasst die Schaltungsanordnung daher einen Unterspannungsschutz. Der Unterspannungsschutz umfasst bevorzugt eine Steuereinheit, insbesondere einen Mikrocontroller. Die Steuereinheit ist eingerichtet, die Kondensatorspannung zu erfassen, anhand eines vorgegebenen Grenzwertes eine drohende Unterspannung zu ermitteln und daraufhin den Entladevorgang zu unterbrechen. Besonders bevorzugt ist die Steuereinheit mit einem Schaltorgan verbunden, wobei sich das Schaltorgan zwischen Verbraucher und Superkondensator befindet. Die Steuereinheit ist eingerichtet, das Schaltorgan anzusteuern, wenn die Kondensatorspannung unter den vorgegeben Grenzwert fällt.

Gemäß einer Ausgestaltung der Erfindung genügt ein und dasselbe Schaltorgan, das zwischen einem gemeinsamen Anschluss von Stromquelle und Verbraucher und dem Superkondensator angeordnet ist, um den Kondensator sowohl bei Unterals auch bei Überspannung abzutrennen. Bei anderen Ausführungsformen können auch zwei Schaltorgane vorgesehen sein. In diesem Fall befindet sich ein Schaltorgan zwischen Stromquelle und Superkondensator und das weitere Schaltorgan zwischen Verbraucher und Superkondensator. Die Schaltorgane können dann bei Erreichen eines Grenzwertes für die Unterspannung bzw. für die Überspannung von der Steuereinheit angesteuert werden. Alternativ kann auch ein Umschaltrelais eingesetzt werden, mit welchem der Superkondensator wahlweise mit der Stromquelle oder dem Verbraucher verbindbar ist.

Die Stromquelle und der Verbraucher können wie erwähnt direkt miteinander verbunden sein, wobei die Schaltungsanordnung dann an einem gemeinsamen Anschluss mit der Stromquelle und dem Verbraucher verbunden ist. Eine solche Verschaltung ist beispielsweise bei einer Photovoltaikanlage (Stromquelle) denkbar, an welcher ein Elektrofahrzeug mit einem lokalen Energiespeicher (Verbraucher) angeschlossen ist. Die Schaltungsanordnung speichert dann etwaig vorhandene, überschüssige Energie und gibt Energie ab, wenn der Verbraucher mehr benötigt, als die Photovoltaikanlage liefert.

Zusätzlich zu dem Schaltorgan können in beiden Fällen ein (Hochleistungs-)Gleichrichter und/oder Dioden an dem Anschluss zwischen Schaltungsanordnung und Stromquelle bzw. Schaltungsanordnung und Verbraucher zum Einsatz kommen. Sind Stromquelle und Verbraucher getrennt voneinander mit der Schaltungsanordnung verbindbar, so ist bevorzugt eine Diode zwischen Stromquelle und Superkondensator und/oder eine Diode zwischen Verbraucher und Superkondensator angeordnet, wobei die Dioden jeweils nur die gewünschte Stromrichtung zulassen, also von der Stromquelle zu dem Superkondensator und von dem Superkondensator zu dem Verbraucher. Dioden und/oder (Hochleistungs-)Gleichrichter können auch parallel zu dem Schaltorgang zum Einsatz kommen. Werden mit der gespeicherten Energie aus der Schaltungsanordnung beispielsweise Elektromotoren direkt betrieben, so ist der Einsatz eines "harten" Schaltorgangs, wie beispielsweise eines Relais, problematisch: Beim Zuschalten des Schaltorgangs fließt in diesem Fall schlagartig ein hoher Strom, was nachteilig ist. Um dies abzumildern, kann eine Diode oder ein Hochleistungsgleichrichter parallel zu dem Schaltorgan geschaltet sein, um zunächst nur einen geringeren Stromfluss zu erlauben, wobei der Elektromotor dann erst beim Zuschalten des Schaltorgans den maximal möglichen Stromfluss erhält. Ein solcher Aufbau ist insbesondere dann denkbar, wenn die Schaltungsanordnung als Zwischenspeicher, beispielsweise zwischen einer Brennstoffzelle und Elektromotoren eines Fahrzeugantriebs, eingesetzt wird. Eine parallel geschaltete Diode bzw. ein parallel geschalteter (Hochleistungs-)Gleichrichter kann optional zusätzlich mit einem weiteren Schaltorgan in Reihe geschaltet sein, um jeglichen Stromfluss zu dem Verbraucher unterbinden zu können.

Werden mehrere Superkondensatoren oder Superkondensatorgruppen in Reihe geschaltet, so kann die Erfassung der Kondensatorspannung über die gesamte Superkondensatorgruppe erfolgen, wobei in dem vorgegebenen Grenzwert der Unterspannung eine Sicherheitsmarge zuzüglich zu der Summe der Nominalspannungen der einzelnen Superkondensatoren zu berücksichtigen ist. Bevorzugt ist die Steuereinheit jedoch eingerichtet, die Kondensatorspannung an jedem Superkondensator oder jeder Superkondensatorgruppe zu erfassen und mit dem Grenzwert zu vergleichen. Die Verbindung zum Verbraucher wird getrennt, wenn einer der Superkondensatoren oder eine der Superkondensatorgruppen unter den Grenzwert fällt.

Die Aufgabe der Erfindung wird auch durch einen elektrischen Energiespeicher mit einem Gehäuse und einer in dem Gehäuse angeordneten Schaltungsanordnung nach der obigen Beschreibung gelöst. Das Gehäuse schützt die Schaltungsanordnung und insbesondere die Superkondensatoren vor äußeren Einflüssen. Dadurch kann die Schaltungsanordnung beispielsweise im privaten Bereich aufgestellt und mit einer Photovoltaikanlage verbunden und von dieser aufgeladen werden. Auch in einem Fahrzeug kann die Schaltungsanordnung eingesetzt werden, insbesondere als Zwischenspeicher in Fahrzeugen mit alternativen Antrieben, z. B. in Elektrofahrzeugen und in mit Wasserstoff, Erdgas oder Autogas betriebenen Fahrzeugen. Beispielsweise kann die Schaltungsanordnung in einem Brennstoffzellenfahrzeug als Zwischenspeicher zwischen Brennstoffzelle und Antriebsmotoren oder als Primärenergiequelle für ein Elektrofahrzeug (E-Fahrzeug) eingesetzt werden. Die Schaltungsanordnung kann auch als Zwischenspeicher in einer Ladestation für Elektrofahrzeuge eingesetzt werden. Eine weitere mögliche Anwendung betrifft Windkraftanlagen. Aktuell werden Windkraftanlagen abgeschaltet (aus dem Wind genommen), wenn genügend Energie im Stromnetz vorhanden ist. In dieser Zeit werden sie daran gehindert, Energie einzuspeisen, wodurch ihre Effizienz sinkt. Die Schaltungsanordnung kann hier als Puffer eingesetzt werden, welcher immer dann geladen wird, wenn das Stromnetz keine Energie aufnehmen kann. Wenn das Stromnetz wieder aufnahmebereit ist, kann die in dem Puffer gespeicherte Energie eingespeist werden. Die Schaltungsanordnung ist ferner als mobiler Speicher einsetzbar. Dabei kann sie beispielsweise auf einer (Euro-)Palette angeordnet sein und auf diese Weise in ein Fahrzeug (bspw. einen Transporter) geladen werden. Das Fahrzeug kann dann mobil zum Aufladen von anderen Fahrzeugen (liegengebliebene E-Fahrzeuge, e-Scooter, etc.) eingesetzt werden. Auch als mobiler Speicher kann die Schaltungsanordnung in einem Elektrofahrzeug eingesetzt werden, indem sie dort die Primärquelle darstellt, aber austauschbar ist. Eine entsprechende Verwendung der Schaltungsanordnung ist deshalb ebenfalls Gegenstand der Erfindung. Aufgrund der hohen möglichen Lade- und Entladeströme von Superkondensatoren können durch deren Einsatz die Ladezeiten von Elektrofahrzeugen verkürzt werden, ohne die Leitungskapazitäten zu den Ladesäulen erhöhen zu müssen, insbesondere wenn die Ladesäule oder das Ladegerät mit der erfindungsgemäßen Schaltungsanordnung ausgestattet ist, was dieser Anwendung zugutekommt. Die Aufladung der Kondensatoren kann dann über einen längeren Zeitraum, in dem kein Verbraucher angeklemmt ist, erfolgen.

Die Erfindung wird nachfolgend anhand der Figuren beispielhaft dargestellt und erläutert. Es zeigen
- Figur 1: einen Schaltplan einer Schaltungsanordnung gemäß einer ersten Ausführungsform,
- Figur 2: einen Schaltplan einer Schaltungsanordnung gemäß einer zweiten Ausführungsform und
- Figur 3: einen Schaltplan einer Schaltungsanordnung gemäß einer dritten Ausführungsform.

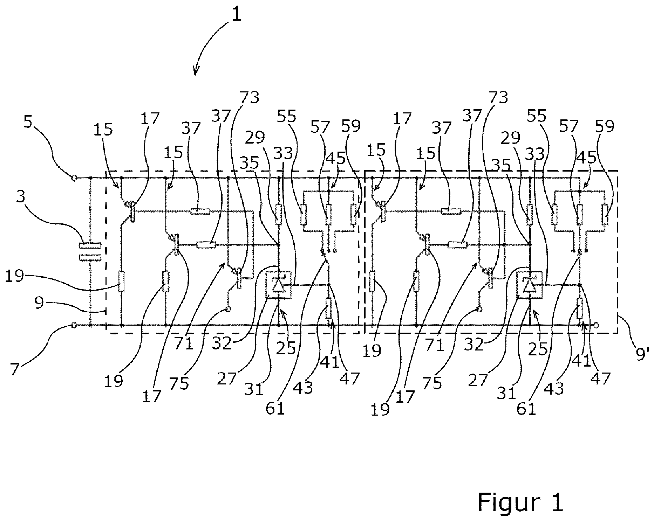

Die in Figur 1 dargestellte Schaltungsanordnung 1 umfasst einen Superkondensator 3 sowie einen Anodenanschluss 5 und einen Kathodenanschluss 7, an denen eine Stromquelle (nicht dargestellt) sowie ein Verbraucher (nicht dargestellt) angeschlossen werden kann. Wird eine Stromquelle angeschlossen, so werden die Superkondensatoren 3 aufgeladen.

Parallel zu jedem der Superkondensatoren 3 sind jeweils zwei Bypass-Schaltungen 9, 9' vorgesehen. Die Bypass-Schaltungen 9, 9' sind hinsichtlich der verwendeten Bauteile identisch, weshalb im Folgenden nur eine im Einzelnen beschrieben wird.

Die Bypass-Schaltung 9, 9' umfasst eine Mehrzahl von Strängen, die jeweils parallel zu dem Superkondensator 3 geschaltet sind: zwei Bypass-Stränge 15, einen Reglerstrang 25 und einen Spannungsteilerstrang. Die Stränge werden im Folgenden näher erläutert:
Der Bypass-Strang 15 umfasst die Laststrecke eines Bypass-Transistors 17, wobei die Laststrecke in Reihe mit einem ersten Widerstand 19 geschaltet ist. Die Bypass-Schaltung 9, 9' umfasst zwei Bypass-Stränge 15 mit jeweils einem Bypass-Transistor 17. Die Bypass-Stränge 15 sind jeweils parallel zu dem Superkondensator 3 geschaltet. Bei dem Bypass-Transistor 17 handelt es sich um einen pnp-Bipolartransistor.

Der Reglerstrang 25 umfasst die Laststrecke eines Querreglers 27, wobei die Laststrecke mit einem zweiten Widerstand 29 in Reihe geschaltet ist. Bei dem Querregler 27 handelt es sich um einen TL431. Es handelt sich hierbei um einen steuerbaren Querregler 27 mit drei Anschlüssen, einem Anodenanschluss 32, einem Kathodenanschluss 31 und einem Referenzanschluss 33. Die Laststrecke verläuft zwischen dem Anodenanschluss 32 und dem Kathodenanschluss 31.

Zwischen dem Querregler 27 und dem zweiten Widerstand 29 befindet sich ein Knoten 35, der mit der Basis beider Bypass-Transistoren 17 verbunden ist. Zwischen dem Knoten 35 und der Basis ist jeweils ein dritter Widerstand 37 zum Toleranzausgleich angeordnet. Liegt zwischen dem Referenzanschluss 33 und der Anode des Querreglers 27 eine Spannung unterhalb dessen Schaltschwelle an, sperrt der Querregler 27. Die Basis beider Bypass-Transistoren 17 liegt dann auf dem Anodenpotential. Wird die Schaltschwelle des Querreglers 27 an dessen Referenzanschluss 33 erreicht, leitet der Querregler 27 und die Systemspannung fällt über den zweiten Widerstand 29 ab. Die Basis der Bypass-Transistoren 17 wird daher auf das Potential der Kathode gezogen, wodurch die Bypass-Transistoren 17 leitend werden. Auf diese Weise definiert die Schaltschwelle des Querreglers 27 den Schaltpunkt für die Bypass-Transistoren 17. Nach dem Schalten der Bypass-Transistoren 17 fließt ein Teil des Ladestroms an dem Superkondensator 3 vorbei durch den Bypass-Transistor 17 und lädt auf diese Weise den Superkondensator 3 nicht mehr auf. Der Superkondensator 3 wird auf diese Weise vor Überspannung geschützt.

Der Spannungsteilerstrang weist einen Spannungsteiler 41 auf. Der Spannungsteiler 41 umfasst einen einzelnen vierten Widerstand 43, der mit einer variablen Widerstandsanordnung 45 in Reihe geschaltet ist. Zwischen dem vierten Widerstand 43 und der variablen Widerstandsanordnung 45 ist ein Knoten 47 angeordnet, der mit dem Referenzanschluss 33, also dem Steuereingang, des Querreglers 27 verbunden ist. Der Spannungsteiler 41 definiert auf diese Weise, bei welcher Kondensatorspannung der Querregler 27 seine Schaltschwelle erreicht und schaltet.

Die variable Widerstandsanordnung 45 umfasst mehrere parallel geschaltete Teilstränge mit jeweils einem Widerstand 55, 57, 59 und einem Auswahlmittel 61. Die Widerstände 55, 57, 59 sind unterschiedlich groß. Mittels des Auswahlmittels 61 ist genau ein Teilstrang als leitender Teilstrang auswählbar. Auf diese Weise kann der Spannungsteiler 41 an den jeweils zu schützenden Superkondensator 3 angepasst werden. Die Wahl des leitenden Teilstrangs beeinflusst, bei welcher Kondensatorspannung der Querregler 27 seine Schaltschwelle erreicht, da sich das Knotenpotential an dem Knoten 47 ändert, je nachdem, welcher Teilstrang als leitender Teilstrang ausgewählt ist.

Die beiden Bypass-Schaltungen 9, 9', die parallel zu dem gleichen Superkondensator 3 geschaltet sind, weisen wie erwähnt die gleichen Bauteile auf, die in der gleichen Art und Weise miteinander verschaltet sind. Allerdings sind die variable Widerstandsanordnungen 45 der beiden Bypass-Schaltungen 9, 9' unterschiedlich eingestellt. In der gezeigten Ausführungsform ist bei der einen Bypass-Schaltung 9 der erste Teilstrang mit dem Widerstand 55 und bei der zweiten Bypass-Schaltung 9' der zweite Teilstrang mit dem Widerstand 57 als leitender Teilstrang ausgewählt. Dadurch erreichen die Querregler 27 der Bypass-Schaltungen 9 bei unterschiedlichen Kondensatorspannungen ihre Schaltschwelle und steuern ihre jeweiligen Bypass-Transistoren 17 zu unterschiedlichen Zeitpunkten an.

Die Schaltungsanordnung 1 umfasst ferner einen Auswertestrang 71, der einen Auswertetransistor 73 zum Ansteuern einer Auswerteeinheit (nicht dargestellt) umfasst und einerseits mit dem Anodenanschluss 5 und andererseits mit einem Auswerteausgang 75 verbunden ist. Der Auswertetransistor 73 wird ebenfalls von dem Querregler 27 angesteuert, sobald dieser seine Schaltschwelle erreicht. Auf diese Weise definiert die Schaltschwelle des Querreglers 27 den Schaltpunkt für den Auswertetransistor 73. Die Auswerteeinheit kann an den Auswerteausgang 75 angeschlossen werden. Auf diese Weise kann mittels der Auswerteeinheit ermittelt werden, ob die jeweilige Bypass-Schaltung 9, 9' aktiv oder passiv ist.

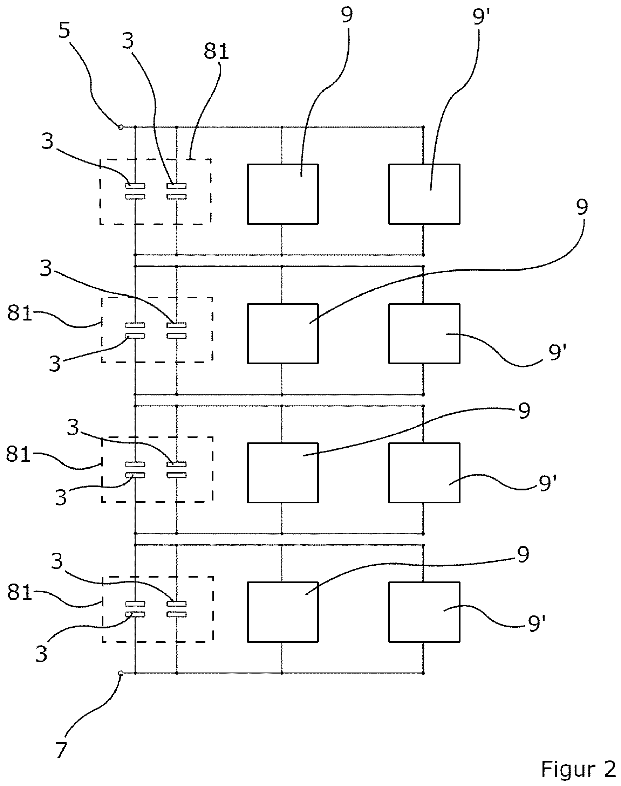

Die Schaltungsanordnung 1 gemäß Figur 2 weist beispielhaft vier in Reihe geschaltete Superkondensatorgruppen 81 mit beispielhaft jeweils zwei parallel geschalteten Superkondensatoren 3 auf. Jede Superkondensatorgruppe 81 wird von zwei Bypass-Schaltungen 9, 9', die parallel zu der zugehörigen Superkondensatorgruppe 81 geschaltet sind, vor Überspannung geschützt. Die Bypass-Schaltungen 9, 9' sind identisch zu denen der Ausführungsform gemäß Figur 1 und hier nur schematisch dargestellt.

Bei der gezeigten Ausführungsform sind alle Superkondensatoren 3 nominell baugleich. Starke Abweichungen der Superkondensatorgruppen 81 von ihrer Nennkapazität, die vorliegend jeweils dem Zweifachen der Nennkapazität eines einzelnen Superkondensators 3 entspricht, werden dadurch weniger wahrscheinlich.

Durch die Reihenschaltung der Superkondensatorgruppen 81 addieren sich die Nennspannungen der einzelnen Superkondensatoren 3 zu einer Gesamtnennspannung der Schaltungsanordnung 1. Ein einzelner Superkondensator 3 hat bei dieser Ausführungsform eine Nennspannung von 2,7 V, die Schaltungsanordnung 1 hat daher eine Gesamtnennspannung von 4 • 2,7 V = 10,8 V.

Bei anderen Ausführungsformen kann die Anzahl der in Reihe geschalteten Superkondensatoren 3 oder Superkondensatorgruppen 81 eine andere sein. Ebenso können die Superkondensatorgruppen 81 bei anderen Ausführungsformen mehr als zwei Superkondensatoren 3 umfassen, die parallel geschaltet sind.

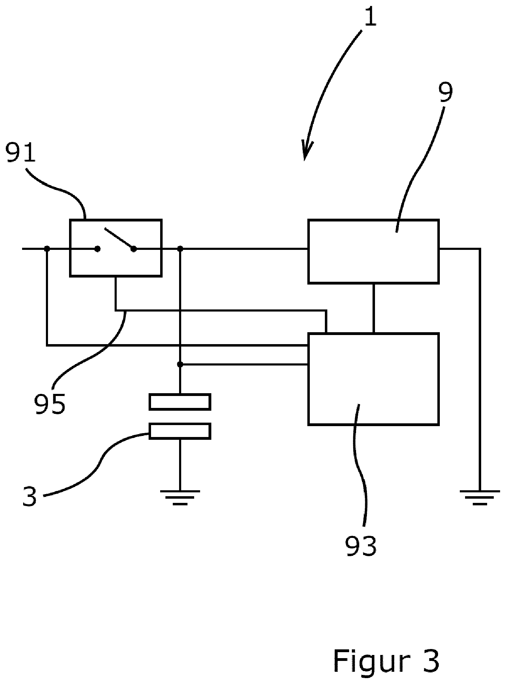

Die in Figur 3 dargestellte Schaltungsanordnung 1 umfasst einen Superkondensator 3, der von einer Bypass-Schaltung 9 vor Überspannung geschützt wird.

Die Schaltungsanordnung 1 umfasst ferner ein Relais 91, mittels dem der Superkondensator 3 mit einem Verbraucher (nicht dargestellt) und einer Stromquelle (nicht dargestellt) verbunden ist. Der Verbraucher und die Stromquelle befinden sich somit vor dem Relais 91 und der Superkondensator 3 hinter dem Relais 91. Ein Mikrocontroller 93 erfasst die Spannung vor und hinter dem Relais 91. Zudem ist der Mikrocontroller 93 mit der Bypass-Schaltung 9 verbunden und empfängt als Eingangssignal das Signal des Auswertetransistors 73. Im Falle von mehreren in Reihe geschalteten Superkondensatoren 3 erfasst der Mikrocontroller 93 zum Einen die Gesamtspannung über alle Superkondensatoren 3 und mittels der Auswertetransistoren 73 die über den einzelnen Superkondensatoren 3 (oder Superkondensatorgruppen 81) anliegende Spannung.

Stellt der Mikrocontroller 93 fest, dass die Spannung hinter dem Relais 91 einen vorgegebenen oberen Grenzwert überschreitet, also eine Überspannung droht, oder einen vorgegebenen unteren Grenzwert unterschreitet, also eine Unterspannung droht, so öffnet er das Relais 91 mittels einer Steuerleitung 95 und schützt auf diese Weise den Superkondensator 3.

Da der Mikrocontroller 93 auch die Spannung vor dem Relais 91 erfasst, kann er auch bei geöffnetem Relais 91 den Spannungszustand auf der Seite des Verbrauchers und der Stromquelle erfassen und in Abhängigkeit davon das Relais 91 wieder schließen, wenn der jeweilige Grenzwert wieder unter- bzw. Überschritten wird, oder andernfalls offen belassen.

### Bezugszeichenliste

- 1: Schaltungsanordnung
- 3: Superkondensator
- 5: Anodenanschluss
- 7: Kathodenanschluss

- 9, 9': Bypass-Schaltung
- 15: Bypass-Strang
- 17: Bypass-Transistor
- 19: erster Widerstand

- 25: Reglerstrang
- 27: Querregler
- 29: zweiter Widerstand
- 31: Kathodenanschluss
- 32: Anodenanschluss
- 33: Referenzanschluss
- 35: Knoten
- 37: dritter Widerstand

- 41: Spannungsteiler
- 43: vierter Widerstand
- 45: variable Widerstandsanordnung
- 47: Knoten
- 55: Widerstand
- 57: Widerstand
- 59: Widerstand
- 61: Auswahlmittel
- 71: Auswertestrang
- 73: Auswertetransistor
- 75: Auswerteausgang
- 81: Superkondensatorgruppe

- 91: Relais
- 93: Mikrocontroller
- 95: Steuerleitung

## Patentansprüche

1. Schaltungsanordnung (1) mit zumindest einem Superkondensator (3) und wenigstens einer parallel zu dem Superkondensator (3) geschalteten Bypass-Schaltung (9, 9'), wobei die wenigstens eine Bypass-Schaltung (9, 9') wenigstens zwei als schaltende Elemente arbeitende, jeweils parallel zum Superkondensator (3) geschaltete Bypass-Transistoren (17) umfasst,
**dadurch gekennzeichnet, dass** die wenigstens eine Bypass-Schaltung (9, 9') einen parallel zum Superkondensator (3) geschalteten Querregler (27) umfasst, dessen Schaltschwelle den Schaltpunkt für die wenigstens zwei parallel geschalteten Bypass-Transistoren (17) definiert.

2. Schaltungsanordnung (1) nach Anspruch 1,
**dadurch gekennzeichnet, dass** zumindest zwei parallel geschaltete, Superkondensatoren (3) vorgesehen sind, die gemeinsam eine Superkondensatorgruppe (81) bilden und dass die parallel geschalteten Superkondensatoren (3) nominell baugleich sind.

3. Schaltungsanordnung (1) nach einem der vorhergehenden Ansprüche,
**dadurch gekennzeichnet, dass** mehrere Superkondensatoren (3) oder mehrere Superkondensatorgruppen (81) in Reihe geschaltet sind, wobei jedem der mehreren Superkondensatoren (3) oder jeder der mehreren Superkondensatorgruppen (81) wenigstens eine parallel geschaltete Bypass-Schaltung (9, 9') nach einem der vorstehenden Ansprüche zugeordnet ist.

4. Schaltungsanordnung (1) nach einem der vorhergehenden Ansprüche,
**dadurch gekennzeichnet, dass** der Bypass-Transistor (17) der wenigstens einen Bypass-Schaltung (9, 9') ein Bipolartransistor oder ein MOSFET ist.

5. Schaltungsanordnung (1) nach einem der vorhergehenden Ansprüche,
**dadurch gekennzeichnet, dass** die wenigstens eine Bypass-Schaltung (9, 9') einen parallel zum Superkondensator (3) geschalteten Spannungsteiler (41) umfasst, dessen Knoten (47) mit einem Steuereingang des Querreglers (27) der wenigstens einen Bypass-Schaltung (9, 9') verbunden ist, wobei durch den Spannungsteiler (41) definiert ist, bei welcher an dem Superkondensator (3) anliegenden Kondensatorspannung der Querregler (27) seine Schaltschwelle erreicht.

6. Schaltungsanordnung (1) nach einem der vorstehenden Ansprüche,
**dadurch gekennzeichnet, dass** wenigstens zwei parallel zu dem Superkondensator (3) oder zu der Superkondensatorgruppe (81) geschaltete Bypass-Schaltungen (9, 9') vorgesehen sind.

7. Schaltungsanordnung (1) nach Anspruch 5 und Anspruch 6,
**dadurch gekennzeichnet, dass** die Spannungsteiler (41) der beiden jeweils parallel zu dem gleichen Superkondensator (3) geschalteten Bypass-Schaltungen (9, 9') unterschiedlich sind.

8. Schaltungsanordnung (1) nach Anspruch 5 oder 7,
**dadurch gekennzeichnet, dass** der Spannungsteiler (41) der wenigstens einen Bypass-Schaltung (9, 9') eine variable Widerstandsanordnung (45) umfasst, mittels der das Knotenpotential auswählbar ist.

9. Schaltungsanordnung (1) nach Anspruch 8,
**dadurch gekennzeichnet, dass** die variable Widerstandsanordnung (45) mehrere parallele Teilstränge mit jeweils einem unterschiedlichen elektrischen Widerstand (55, 57, 59) aufweist und ein Auswahlmittel (61) umfasst, wobei mittels des Auswahlmittels (61) genau ein Teilstrang als leitender Teilstrang auswählbar ist oder mehrere Teilstränge als leitende Teilstränge auswählbar sind oder dass die variable Widerstandsanordnung (45) ein Potentiometer umfasst.

10. Schaltungsanordnung (1) nach einem der vorhergehenden Ansprüche,
**dadurch gekennzeichnet, dass** die wenigstens eine Bypass-Schaltung (9, 9') einen Auswertetransistor (73) zum Ansteuern einer Auswerteeinheit umfasst, wobei die Schaltschwelle des Querreglers (27) den Schaltpunkt für den Auswertetransistor (73) definiert.

11. Schaltungsanordnung (1) nach Anspruch 10 mit wenigstens zwei Bypass-Schaltungen (9, 9'),
**gekennzeichnet durch** eine zentrale Auswerteeinheit, wobei ein Ausgang jedes Auswertetransistors (73) der wenigstens zwei Bypass-Schaltungen (9, 9') mit einem Eingang der Auswerteeinheit verbunden ist.

12. Schaltungsanordnung (1) nach einem der vorhergehenden Ansprüche,
**dadurch gekennzeichnet, dass** ein erster Widerstand (19) zu dem Bypass-Transistor (17) in Reihe geschaltet ist und dass der erste Widerstand (19) und der Bypass-Transistor (17) gemeinsam parallel zu dem Superkondensator (3) geschaltet sind.

13. Schaltungsanordnung (1) nach einem der vorhergehenden Ansprüche,
**dadurch gekennzeichnet, dass** ein Ausgang des Querreglers (27) mit einem Steuereingang jedes Bypass-Transistors (17) verbunden ist, wobei zwischen dem Ausgang des Querreglers (27) und dem Eingang jedes Bypass-Transistors (17) ein dritter Widerstand (37) angeordnet ist.

14. Elektrischer Energiespeicher mit einem Gehäuse und einer in dem Gehäuse angeordneten Schaltungsanordnung (1) nach einem der vorhergehenden Ansprüche.

15. Verwendung einer Schaltungsanordnung (1) nach einem der Ansprüche 1 bis 13 als Energiespeicher in einer Photovoltaikanlage, in einem Fahrzeug mit alternativem Antrieb, in einer Ladestation für Elektrofahrzeuge, in einem Pufferspeicher einer Windkraftanlage oder in einem mobilen Speicher.

## Claims

1. Circuit arrangement (1) having at least one supercapacitor (3) and at least one bypass circuit (9, 9') connected in parallel with the supercapacitor (3), wherein the at least one bypass circuit (9, 9') comprises at least two bypass transistors (17) which operate as switching elements and are each connected in parallel with the supercapacitor (3),
**characterised in that** the at least one bypass circuit (9, 9') comprises a cross-regulator (27) connected in parallel with the supercapacitor (3), the switching threshold of which defines the switching point for the at least two bypass transistors (17) connected in parallel.

2. Circuit arrangement (1) according to claim 1,
**characterised in that** at least two supercapacitors (3) connected in parallel are provided, which together form a supercapacitor group (81) and **in that** the supercapacitors (3) connected in parallel are nominally identical in construction.

3. Circuit arrangement (1) according to one of the preceding claims,
**characterised in that** a plurality of supercapacitors (3) or a plurality of supercapacitor groups (81) are connected in series, wherein at least one bypass circuit (9, 9') connected in parallel according to one of the preceding claims is associated with each of the plurality of supercapacitors (3) or each of the plurality of supercapacitor groups (81).

4. Circuit arrangement (1) according to one of the preceding claims,
**characterised in that** the bypass transistor (17) of the at least one bypass circuit (9, 9') is a bipolar junction transistor or a MOSFET.

5. Circuit arrangement (1) according to one of the preceding claims,
**characterised in that** the at least one bypass circuit (9, 9') comprises a voltage divider (41) which is connected in parallel with the supercapacitor (3) and whose node (47) is connected to a control input of the cross-regulator (27) of the at least one bypass circuit (9, 9'), wherein the voltage divider (41) defines the capacitor voltage at which the cross-regulator (27) reaches its switching threshold when applied to the supercapacitor (3).

6. Circuit arrangement (1) according to one of the preceding claims,
**characterised in that** at least two bypass circuits (9, 9') connected in parallel to the supercapacitor (3) or to the supercapacitor group (81) are provided.

7. Circuit arrangement (1) according to claim 5 and claim 6,
**characterised in that** the voltage dividers (41) of the two bypass circuits (9, 9') connected in parallel to the same supercapacitor (3) are different.

8. Circuit arrangement (1) according to claim 5 or 7,
**characterised in that** the voltage divider (41) of the at least one bypass circuit (9, 9') comprises a variable resistor arrangement (45) by means of which the node potential can be selected.

9. Circuit arrangement (1) according to claim 8,
**characterised in that** the variable resistor arrangement (45) has a plurality of parallel partial strings each with a different electrical resistance (55, 57, 59) and comprises a selection means (61), wherein it is possible to select precisely one partial string as a conductive partial string by means of the selection means (61) or wherein it is possible to select a plurality of partial strings as conductive partial strings, or **in that** the variable resistor arrangement (45) comprises a potentiometer.

10. Circuit arrangement (1) according to one of the preceding claims,
**characterised in that** the at least one bypass circuit (9, 9') comprises an evaluation transistor (73) for activating an evaluation unit, wherein the switching threshold of the cross-regulator (27) defines the switching point for the evaluation transistor (73).

11. Circuit arrangement (1) according to claim 10 with at least two bypass circuits (9, 9'),
**characterised by** a central evaluation unit, wherein an output of each evaluation transistor (73) of the at least two bypass circuits (9, 9') is connected to an input of the evaluation unit.

12. Circuit arrangement (1) according to one of the preceding claims,
**characterised in that** a first resistor (19) is connected in series with the bypass transistor (17) and **in that** the first resistor (19) and the bypass transistor (17) are connected together in parallel with the supercapacitor (3).

13. Circuit arrangement (1) according to one of the preceding claims,
**characterised in that** an output of the cross-regulator (27) is connected to a control input of each bypass transistor (17), a third resistor (37) being arranged between the output of the cross-regulator (27) and the input of each bypass transistor (17).

14. Electrical energy storage device with a housing and a circuit arrangement (1) arranged in the housing according to one of the preceding claims.

15. Use of a circuit arrangement (1) according to one of claims 1 to 13 as an energy storage device in a photovoltaic system, in a vehicle with alternative drive, in a charging station for electric vehicles, in a buffer storage of a wind power plant or in a mobile storage system.

## Revendications

1. Circuit (1) comprenant au moins un supercondensateur (3) et au moins un circuit de dérivation (9, 9') branché en parallèle avec le supercondensateur (3), le au moins un circuit de dérivation (9, 9') comprenant au moins deux transistors de dérivation (17) fonctionnant comme éléments de commutation et branchés chacun en parallèle avec le supercondensateur (3),
**caractérisé en ce que** le au moins un circuit de dérivation (9, 9') comprend un régulateur transversal (27) monté en parallèle avec le supercondensateur (3), dont le seuil de commutation définit le point de commutation pour les au moins deux transistors de dérivation (17) montés en parallèle.

2. Circuit (1) selon la revendication 1,
**caractérisé en ce qu'**il est prévu au moins deux supercondensateurs (3) montés en parallèle, qui forment ensemble un groupe de supercondensateurs (81) et **en ce que** les supercondensateurs (3) montés en parallèle sont de construction nominale identique.

3. Circuit (1) selon l'une des revendications précédentes,
**caractérisé en ce que** plusieurs supercondensateurs (3) ou plusieurs groupes de supercondensateurs (81) sont montés en série, au moins un circuit de dérivation (9, 9') monté en parallèle selon l'une des revendications précédentes étant associé à chacun des plusieurs supercondensateurs (3) ou à chacun des plusieurs groupes de supercondensateurs (81).

4. Circuit (1) selon l'une des revendications précédentes,
**caractérisé en ce que** le transistor de dérivation (17) dudit au moins un circuit de dérivation (9, 9') est un transistor bipolaire ou un MOSFET.

5. Circuit (1) selon l'une des revendications précédentes,
**caractérisé en ce que** le au moins un circuit de dérivation (9, 9') comprend un diviseur de tension (41) monté en parallèle avec le supercondensateur (3), dont le noeud (47) est relié à une entrée de commande du régulateur transversal (27) du au moins un circuit de dérivation (9, 9'), le diviseur de tension (41) définissant à quelle tension de condensateur appliquée au supercondensateur (3) le régulateur transversal (27) atteint son seuil de commutation.

6. Circuit (1) selon l'une des revendications précédentes,
**caractérisé en ce qu'**il est prévu au moins deux circuits de dérivation (9, 9') montés en parallèle avec le supercondensateur (3) ou avec le groupe de supercondensateurs (81).

7. Circuit (1) selon la revendication 5 et la revendication 6,
**caractérisé en ce que** les diviseurs de tension (41) des deux circuits de derivation (9, 9') montés respectivement en parallèle avec le même supercondensateur (3) sont différents.

8. Circuit (1) selon la revendication 5 ou 7,
**caractérisé en ce que** le diviseur de tension (41) du au moins un circuit de derivation (9, 9') comprend un agencement de résistance variable (45) au moyen duquel le potentiel de noeud peut être sélectionné.

9. Circuit (1) selon la revendication 8,
**caractérisé en ce que** l'agencement de résistance variable (45) présente plusieurs sous-bandes parallèles ayant chacune une résistance électrique différente (55, 57, 59) et comprend un moyen de sélection (61), exactement une sous-bande pouvant être sélectionnée comme sous-bande conductrice au moyen du moyen de sélection (61) ou plusieurs sous-bandes pouvant être sélectionnées comme sous-bandes conductrices ou **en ce que** l'agencement de résistance variable (45) comprend un potentiomètre.

10. Circuit (1) selon l'une des revendications précédentes,
**caractérisé en ce que** le au moins un circuit de dérivation (9, 9') comprend un transistor d'évaluation (73) pour commander une unité d'évaluation, le seuil de commutation du régulateur transversal (27) définissant le point de commutation pour le transistor d'évaluation (73).

11. Circuit (1) selon la revendication 10 avec au moins deux circuits de dérivation (9, 9'),
**caractérisé par** une unité d'évaluation centrale, une sortie de chaque transistor d'évaluation (73) des au moins deux circuits de dérivation (9, 9') étant reliée à une entrée de l'unité d'évaluation.

12. Circuit (1) selon l'une des revendications précédentes,
**caractérisé en ce qu'**une première résistance (19) est connectée en série avec le transistor de dérivation (17) et **en ce que** la première résistance (19) et le transistor de dérivation (17) sont connectés ensemble en parallèle avec le supercondensateur (3).

13. Circuit (1) selon l'une des revendications précédentes,
**caractérisé en ce qu'**une sortie du régulateur transversal (27) est connectée à une entrée de commande de chaque transistor de dérivation (17), une troisième résistance (37) étant disposée entre la sortie du régulateur transversal (27) et l'entrée de chaque transistor de dérivation (17).

14. Accumulateur d'énergie électrique comprenant un boîtier et un circuit (1) disposé dans le boîtier selon l'une des revendications précédentes.

15. Utilisation d'un montage (1) selon l'une des revendications 1 à 13 comme stockage d'énergie dans une installation photovoltaïque, dans un véhicule à propulsion alternative, dans une station de recharge pour véhicules électriques, dans un réservoir tampon d'une éolienne ou dans un stockage mobile.
